# EUROPEAN PATENT APPLICATION

(11) **EP 4 197 893 A1**
(43) Date of publication of application: **21.06.2023**
(21) Application number: 21383168.8
(22) Date of filing: 20.12.2021
(51) Int. Cl.: B62M 9/124

(54) **REAR DERAILLEUR FOR AN OPEN QUADRILATERAL**

(71) Applicant: ZUMA Innovation, S.L., 48960 Galdakao (ES)
(72) Inventor: Zubieta Andueza, Mikel, Galdakao (ES)
(74) Representative: Balder IP Law, S.L.

(57) **Abstract**

The present invention relates to a rear derailleur (100) comprising a base component (1) that can be coupled on an anchoring axis (19) to a bicycle frame (9) and a moveable component (2), components connected to each other by means of a first connector component (3) articulated with respect to the base component (1) by means of a first rotation axis (13) and articulated with respect to the moveable component (2) by means of a second rotation axis (23), and a second connector component (4) articulated with respect to the base component (1) by means of a third rotation axis (14) and articulated with respect to the moveable component (2) by means of a fourth rotation axis (24) parallel to the first rotation axis (13), wherein the third rotation axis (14) is arranged in the base component (1) on the side opposite to the first rotation axis (13) with respect to a central area containing the anchoring axis (19).

## Description

### TECHNICAL FIELD

The present invention falls within the sector of rear derailleurs for bicycles.

### BACKGROUND

Rear derailleurs for bicycles actuated by a deformable quadrilateral mechanism have been known since the 1940s, such as that described in invention FR978189A. Since then, multiple variants have appeared (for example, US3803933A, US4027542A, US4838837A, US5470277A, US6315688B1, US8277346B2, DE102011118912A1, or US9751590B2) which have perfected the design, and today the vast majority of derailleurs on the market are based on a deformable quadrilateral mechanism.

All the rear derailleurs based on deformable quadrilaterals known from the state of the art have in common that the side of the quadrilateral that is attached to the frame is small, at least if we compare it to the distance from this side of the frame to the anchoring point on the frame, since the two axes that define this side of the quadrilateral are usually on the same side with respect to the anchoring point. In this arrangement, the torsional forces transmitted from the derailleur to the frame pass through the two axes of the base component that are very close to each other, so that torsional forces in the plane defined by the two axes cause high reaction forces on both axes. One effect of these high forces on the axes is that friction and wear on these axes increases, with the consequent appearance of radial play on the axes. Furthermore, the proximity between the axes causes the radial play on the axes to translate into greater rotational play on the derailleur, thereby losing precision when the rear derailleur operates. Therefore, the absence of play on the axes is a critical manufacturing aspect that differentiates high-end products from low-end ones. But even the highest-end derailleurs lose operating precision over time due to the onset of play due to wear and tear.

### DESCRIPTION OF THE INVENTION

To provide a solution to the shortcomings of the state of the art, the present invention proposes a rear derailleur for bicycles comprising:
a base component configured to be coupled on an anchoring axis to a bicycle frame, or to an anchoring part solidly attached to the bicycle frame, and a moveable component, the base and moveable components being connected to each other by means of a first connector component articulated with respect to the base component by means of a first rotation axis and articulated with respect to the moveable component by means of a second rotation axis parallel to the first rotation axis, and a second connector component articulated with respect to the base component by means of a third rotation axis parallel to the first rotation axis and articulated with respect to the moveable component by means of a fourth rotation axis parallel to the first rotation axis, wherein the third rotation axis is arranged in the base component on the side opposite to the first rotation axis with respect to a central area containing the anchoring axis.

This arrangement of the axes results in a greater distance between the first rotation axis and the third rotation axis than in the known configurations of the state of the art. A first advantage of this is that the forces on the axes are lower, therefore, the friction is lower and also the wear with use. Moreover, due to the greater distance of the axes, the precision of the derailleur is less sensitive to the appearance of play. This advantage can be exploited commercially in several ways; derailleurs with more precise movement than current ones can be achieved using equivalent guiding solutions, or derailleurs of similar precision can be achieved by using simpler manufacturing and assembling techniques, which entail greater play, to reduce production costs. Moreover, in either case, the product will age better with use, due to the fact that it experiences less wear and is also less sensitive to such wear.

This arrangement of axes can also be expressed in mathematical terms by defining that the support distance between the first rotation axis and the third rotation axis is greater than a first distance defined between the first rotation axis and the anchoring point defined as the intersection of the anchoring axis with the contact plane between the base component and the bicycle frame, or the anchoring part solidly attached to the bicycle frame. And that the support distance is greater than a second distance defined between the anchoring point and the third rotation axis.

In the event that the contact between the base component and the bicycle frame occurs in several planes at the same time, in a plane not perpendicular to the anchoring axis or at discrete points on the surface, the anchoring point is defined as the point of contact with an axial component between the base component and the bicycle frame, or the anchoring part, of greater value according to the rotation vector for advancing a cassette rotationally mounted to the bicycle frame with respect to the wheel axis, wherein if the contact occurs at several points, a vertex or a surface is considered the centroid thereof as an anchoring point.

In some embodiments of the rear derailleur, when the moveable base is in the position of least value according to the rotation vector, the support distance has an intermediate value between a third distance between the first rotation axis and the fourth rotation axis, and a fourth distance between the second rotation axis and the third rotation axis. In this manner, a more compact and aerodynamic rear derailleur is achieved than is known from the state of the art in the small pinion position, despite the distance between the axes of the base component and the moveable component being greater.

In some embodiments of the rear derailleur, the first rotation axis is arranged at an angle of between 10 and 80° with respect to the anchoring axis.

In some embodiments, the rear derailleur comprises a tensioner articulated with respect to the moveable component by means of a tensioner axis and a tension spring that forces the tensioner to rotate in the positive direction of the rotation vector with respect to the moveable component according to the tensioner axis. In other embodiments, the tensioner that positions the pulleys with respect to the cassette and keeps the chain in tension may be actuated in a different way.

In some embodiments, the bicycle frame, or the anchoring part, comprises a rotation stop, wherein the base component has a positioning screw, which when in contact with the rotation stop defines the minimum angular position of operation of the base component with respect to the bicycle frame in the direction of the rotation vector. Furthermore, in some embodiments the anchoring part comprises a single means of axial connection with respect to the bicycle frame in the form of a fixing screw that is concentric to the anchoring axis.

In some embodiments, the anchoring axis is collinear to the wheel axis. The wheel axis is a better reference for the position of the cassette with respect to the frame than the standard derailleur anchoring position, which varies by several millimetres among frame manufacturers. Being able to position the derailleur with respect to the cassette with greater precision enables it to function more precisely, even more so if the greater precision provided by the axis configuration proposed in this invention is added.

In some embodiments, the movement of the moveable component with respect to the base component is electrically actuated. More specifically, in some embodiments the rear derailleur comprises a floating linear actuation unit, comprising an electric motor that drives a spindle-nut mechanism, a power source and a wireless unit, which is articulated with respect to a first component of the rear derailleur according to a fifth rotation axis parallel to the first rotation axis, and which is articulated with respect to a second component of the rear derailleur different from the first component according to a sixth rotation axis parallel to the first rotation axis. Having all the electronics in the floating linear actuation unit has manufacturing and maintenance advantages over other wireless rear derailleur solutions with an articulated quadrilateral mechanism on the market in which the electronic part is distributed, and completely integrated, among the different components: base component, moveable component and connector components. This integration implies that in the event of a failure in the electrical part, the entire rear derailleur must be replaced, whereas in the proposed solution only the floating linear actuation unit would be replaced, reducing assembly times (it does not require disassembling the chain and readjusting the derailleur position), storage space, shipping costs (being lower) and manufacturing costs (only the part that has failed is replaced) being able to offer better customer service. Additionally, the separation of the electrical part - floating linear actuation unit - from the mechanical part - articulated quadrilateral mechanism and chain tensioner - can make the manufacturing and assembly lines of both parts independent and specialise them, reducing manufacturing costs.

The concepts described can also be applied to other equivalent configurations and different sizes.

### BRIEF DESCRIPTION OF THE DRAWINGS

As a complement to the description, and for the purpose of helping to make the features of the invention more readily understandable, in accordance with a preferred practical exemplary embodiment thereof, said description is accompanied by a set of figures which, by way of illustration and not limitation, represent the following:
Figure 1A shows a general view of the rear derailleur mounted on a bicycle frame.
Figure 1B is a cross-sectional view of the rear derailleur with respect to the plane defined by the wheel axis and anchoring axis.
Figure 1C shows a detailed view of the anchoring part wherein the anchoring point is defined.
Figure 1D is a view of the base component perpendicular to the axes that form the articulated quadrilateral wherein the distance between the different axes is compared.
Figure 2A is a side view of the rear derailleur in the small pinion position.
Figure 2B is a rear view of the rear derailleur in the small pinion position.
Figure 3A is a side view of the rear derailleur in the large pinion position.
Figure 3B is a rear view of the rear derailleur in the large pinion position.
Figure 4 is a view of the components that form the articulated quadrilateral perpendicular to the axes that form the articulated quadrilateral wherein the distance between the different axes in the small pinion position is compared.
Figure 5 is a view of the components that form the articulated quadrilateral perpendicular to the axes that form the articulated quadrilateral wherein the distance between the different axes in the large pinion position is compared.
Figure 6 is an exploded view of the rear derailleur.
Figure 7 is an exploded view of the floating linear actuation unit.
Figure 8A shows an overview of a second embodiment of the rear derailleur mounted on a bicycle frame.
Figure 8B is a cross-sectional view of the second embodiment of the rear derailleur with respect to the plane defined by the wheel axis and anchoring axis.
Figure 8C shows a detailed view of the anchoring part of a second embodiment of the rear derailleur wherein the anchoring point is defined.
Figure 8D is a view of the base component of a second embodiment of the rear derailleur perpendicular to the axes that form the articulated quadrilateral wherein the distance between the different axes is compared.
Figure 9A shows an overview of a third embodiment of the rear derailleur mounted on a bicycle frame.
Figure 9B is a cross-sectional view of the third embodiment of the rear derailleur with respect to the plane defined by the wheel axis and anchoring axis.
Figure 9C shows a detailed view of the anchoring part of a third embodiment of the rear derailleur wherein the anchoring point is defined.
Figure 9D is a view of the base component of a third embodiment of the rear derailleur perpendicular to the axes that form the articulated quadrilateral wherein the distance between the different axes is compared.
Figure 10A shows an overview of a fourth embodiment of the rear derailleur mounted on a bicycle frame.
Figure 10B is a cross-sectional view of the fourth embodiment of the rear derailleur with respect to the plane defined by the wheel axis and anchoring axis.
Figure 10C shows a detailed view of the anchoring part of a fourth embodiment of the rear derailleur wherein the internal anchoring point is defined.
Figure 10D is a view of the base component of a fourth embodiment of the rear derailleur perpendicular to the axes that form the articulated quadrilateral wherein the distance between the different axes is compared.

### DESCRIPTION OF PREFERRED EMBODIMENTS OF THE INVENTION

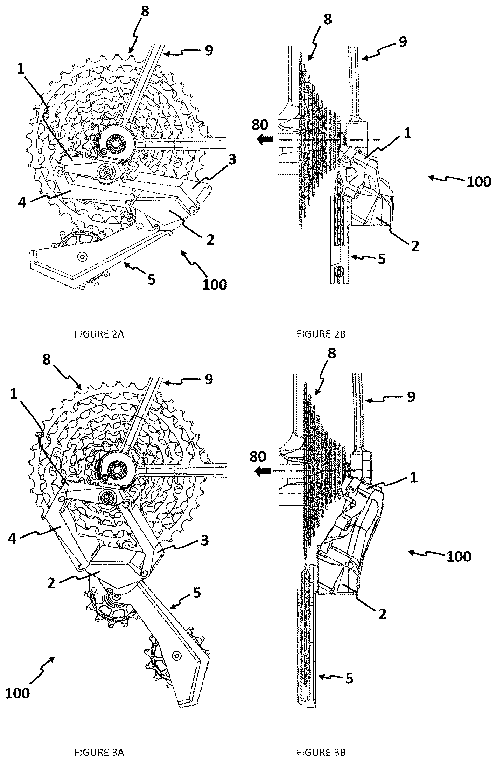

As can be seen in the figures, the invention relates to a rear derailleur 100 for bicycles comprising:
a base component 1 configured to be coupled on an anchoring axis 19 to a bicycle frame 9, or to an anchoring part 90 solidly attached to the bicycle frame 9, and
a moveable component 2, the base 1 and moveable 2 components being connected to each other by means of
a first connector component 3 articulated with respect to the base component 1 by means of a first rotation axis 13 and articulated with respect to the moveable component 2 by means of a second rotation axis 23 parallel to the first rotation axis 13, and
a second connector component 4 articulated with respect to the base component 1 by means of a third rotation axis 14 parallel to the first rotation axis 13 and articulated with respect to the moveable component 2 by means of a fourth rotation axis 24 parallel to the first rotation axis 13,
forming a deformable quadrilateral mechanism that enables the moveable component 2 to be moved with respect to the base component 1 in a path with the component in the direction of the rotation vector 80, for example, between the position of the moveable component 2 with the lowest value according to the rotation vector 80 illustrated in Figures 2A and 2B, and the position of the moveable component 2 of higher value according to the rotation vector 80 illustrated in Figures 3A and 3B.

According to the invention, the third rotation axis 14 is arranged in the base component 1 on the side opposite to the first rotation axis 13 with respect to a central area containing the anchoring axis 19. This configuration entails a greater separation between the first rotation axis 13 and the third rotation axis 14 of the base component 1 than is known from the state of the art. As is well known, the greater the separation between the axes of a deformable quadrilateral mechanism, the greater the precision of movement thereof (less friction and less play), while offering better support to work loads. In addition to achieving a rear derailleur with greater operating precision than what is known from the state of the art, the configuration described in the invention entails very distinctive aesthetics, especially in the open quadrilateral position as shown in Figure 3A, with respect to the rear derailleurs currently on the market that are otherwise very similar to each other.

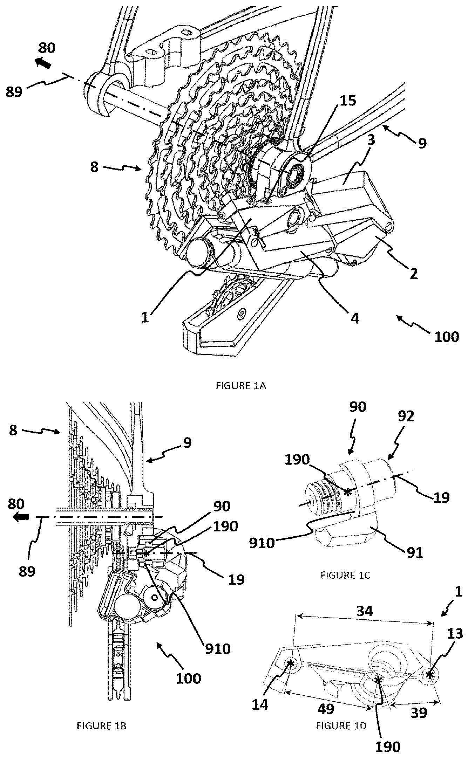

As can be seen in Figures 1D, 8D, 9D and 10D, it can also be seen that the support distance 34 between the first rotation axis 13 and the third rotation axis 14 is greater than a first distance 39 defined between the first rotation axis 13 and the anchoring point 190 defined as the intersection of the anchoring axis 19 with the contact plane 910 between the base component 1 and the bicycle frame 9, or the anchoring part 90 solidly attached to the bicycle frame 9. At the same time, the support distance 34 is greater than a second distance 49 defined between the anchoring point 190 and the third rotation axis 14. In these figures it is also observed that the anchoring point 190 corresponds to the point of contact with an axial component between the base component 1 and the bicycle frame 9, or the anchoring part 90, of greater value according to the rotation vector 80 for advancing a cassette 8 rotationally mounted to the bicycle frame 9 with respect to the wheel axis 89.

The open rear derailleur with greater structural capacity that is achieved with this arrangement of the axes is especially interesting when the moveable component 2 is in its lowest position where it is more exposed to external shocks, and generally associated with a position of greater value according to the rotation vector 80 to bring the chain to the largest pinion of the cassette 8, as illustrated in Figures 3A and 3B.

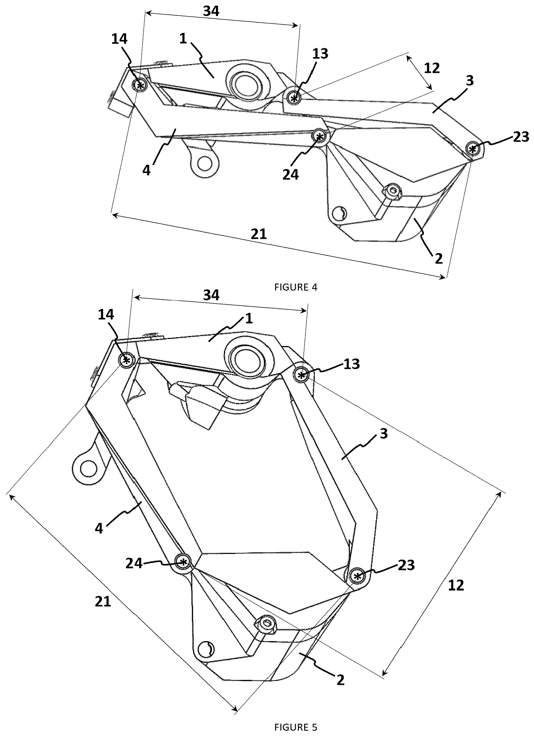

For smaller pinions of the cassette 8 the speed of advancement is usually higher, so the aerodynamic effect tends to be more important; therefore, it is preferable that a closed rear derailleur with better aerodynamics be in this position, as illustrated in Figures 2A and 2B. To achieve this, in some embodiments of the invention with the rear derailleur 100 in the operating configuration wherein the moveable base 2 is in the position of least value according to the rotation vector 80, illustrated for example in Figure 4, the support distance 34 has an intermediate value between a third distance 12 between the first rotation axis 13 and the fourth rotation axis 24, and a fourth distance 21 between the second rotation axis 23 and the third rotation axis 14.

A drawback of the invention is the difficulty in achieving compact solutions due to the fact that the greater separation between the first rotation axis 13 and the third rotation axis 14 of the base component 1 causes more marked geometric interferences between the base component 1, the first connector component 3, the second connector component 3 and the moveable component 4, especially when the first rotation axis 13 is neither parallel nor perpendicular to the anchoring axis 19. However, the figures show configurations of the rear derailleur 100 wherein the first rotation axis 13 is arranged at an angle of between 10 and 80° with respect to the anchoring axis 19, and they are as compact or more compact than current solutions in the market.

In a first preferred embodiment illustrated in Figures 1A to 6, the rear derailleur 100 comprises a tensioner 5 articulated with respect to the moveable component 2 by means of a tensioner axis 25 and a tension spring 50 that forces the tensioner 5 to rotate in the positive direction of the rotation vector 80 with respect to the moveable component 2 according to the tensioner axis 25, to give tension to the chain in any of the positions of the rear derailleur 100, while preloading the base component 1 in the negative direction of the rotation vector 80 so that it maintains its position. To this end, in this first embodiment, the rear derailleur 100, which has an anchoring part 90 comprising a single means of axial connection with respect to the bicycle frame 9 in the form of a fixing screw 92 that is concentric to the anchoring axis 19, also comprises a rotation stop 91, which due to the preload of the tension spring 50 causes the anchoring part 90 to work in solidarity with the frame 9 (except when force is exerted against the torsion spring 50 for example by moving the derailleur 100 back to remove the wheel, wherein the anchoring part 90 could rotate with respect to the frame 9). The base component 1 of the rear derailleur 100 has a positioning screw 15, which in contact with the rotation stop 91 defines the minimum angular operating position of the base component 1 with respect to the bicycle frame 9 in the direction of the rotation vector 80. In this way, by tightening the positioning screw 15, the entire rear derailleur 100 (except for the anchoring part 90 that works in solidarity with the frame 9) is rotated with respect to the frame 9 in the positive direction according to the rotation vector 80, so that the pulleys of the tensioner 5 move away from the cassette 8. While loosening the positioning screw 15, the tension spring 50 causes the entire rear derailleur 100 (except for the anchoring part 90 that works in solidarity with the frame 9) to rotate with respect to the frame 9 in a negative direction according to the rotation vector 80, so that the pulleys of the tensioner 5 move closer to the cassette 8. Thus the screw 15 is considered to be a fine adjustment screw of the position of the rear derailleur 100 with respect to the frame 9, and it enables the derailleur to work with the appropriate distances to the cassette 8 on different frames 9 that entail positions of the rotation stop 91 that are slightly different due to manufacturing tolerances or design parameters. Additionally, the positioning screw 15 can adjust the position of the derailleur to different sized cassettes 8 on the same frame 9.

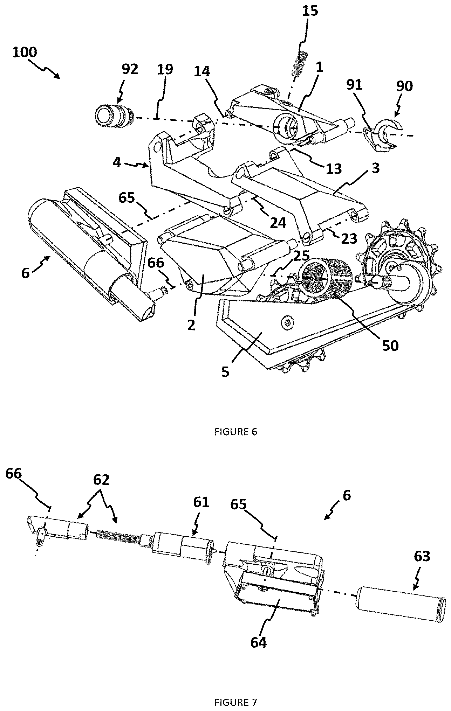

As can be seen in Figures 1A, 1B and 6 in this first preferred embodiment, the movement of the moveable component 2 with respect to the base component 1 is electrically actuated. More specifically, as seen in Figure 7, the rear derailleur 100 comprises a floating linear actuation unit 6, which comprises an electric motor 61 that drives a spindle-nut mechanism 62, a power source 63 and a wireless unit 64, which is articulated with respect to a first component (second connector component 4 in the embodiment of Figure 6) of the rear derailleur 100 according to a fifth rotation axis 65 parallel to the first rotation axis 13, and which is articulated with respect to a second component (moveable component 2 in the embodiment of Figure 6) of the rear derailleur 100 different from the first component (second connector component 4 in the embodiment of Figure 6) according to a sixth rotation axis 66 parallel to the first rotation axis 13. An advantage of this embodiment is that the floating linear actuation unit 6 can be easily removed from the rear derailleur 100, leaving the tensioner 5 and the quadrilateral formed by the base component 1, the moveable component 2, the first connector component 3 and the second connector component 4 structurally operative. That is, the floating linear actuation unit 6 does not fulfil mechanical structural functions. This configuration in which the electrical part (floating linear actuation unit 6) differs from the mechanical part simplifies the manufacture of the rear derailleur 100, since no mechanical properties are required for the electrical part, nor are electrical properties (or sealing) required for the mechanical part. This configuration also facilitates maintenance work, since in the event of an electrical failure, the electrical part can be easily disassembled (without disassembling the mechanical part and losing alignment with the rest of the mechanical components of the bicycle) and independently shipped for repair. And in the event that replacement with a new unit is required, it is sufficient to replace the floating linear actuation unit 6 and not the entire derailleur 100, which implies a lower cost.

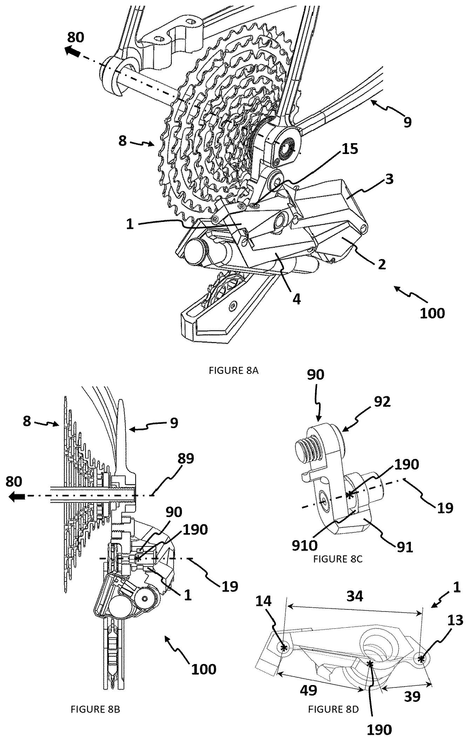

A second preferred embodiment illustrated in Figures 8A to 8D differs from the first preferred embodiment in that the fixing screw 92 of the anchoring part 90 that fixes the rear derailleur 100 to the frame 9 or to a second anchoring part 90 solidly attached to the frame 9 is not concentric to the anchoring axis 19 of the base component 1. In other words, the frame does not determine the position of the anchoring axis 19 with respect to which the fine adjustment of the position of the rear derailleur 100 is performed according to the positioning screw 15. In this manner, the anchoring axis 19 can be put into a position that results in a better adjustment of the rear derailleur 100 to different cassettes 8. Or it can also be used to facilitate wheel removal wherein it is required that the rear derailleur 100 be rotated in the positive direction of the vector 80 against the preload of the torsion spring 50.

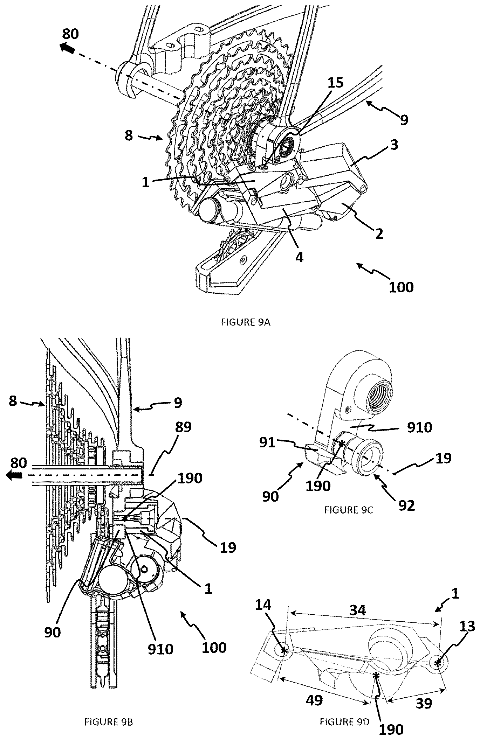

A third preferred embodiment illustrated in Figures 9A to 9D differs from the first preferred embodiment in that the anchoring part 90 is integrated into the frame 9, thus requiring the frame 9 to have a certain geometry including the rotation stop 91, or at least having a removable part, such as, for example, the removable leg 90 illustrated in Figure 8C. This embodiment, unlike the first embodiment, requires the frame manufacturer to integrate the geometry required for the rear derailleur 100 into the design thereof, or that a removable leg 90 specific to each frame 9 be delivered together with the derailleur. If the removable leg 90 is part of the rear derailleur 100, the solution is similar to the second preferred embodiment, only the anchoring to the frame is not defined by any standard unlike the second embodiment which is configured to be able to be mounted on any frame that is prepared to carry a commercial rear derailleur. In this manner, this embodiment has much less compatibility with the frames on the market, but on the other hand it offers better integration with fewer, simpler parts.

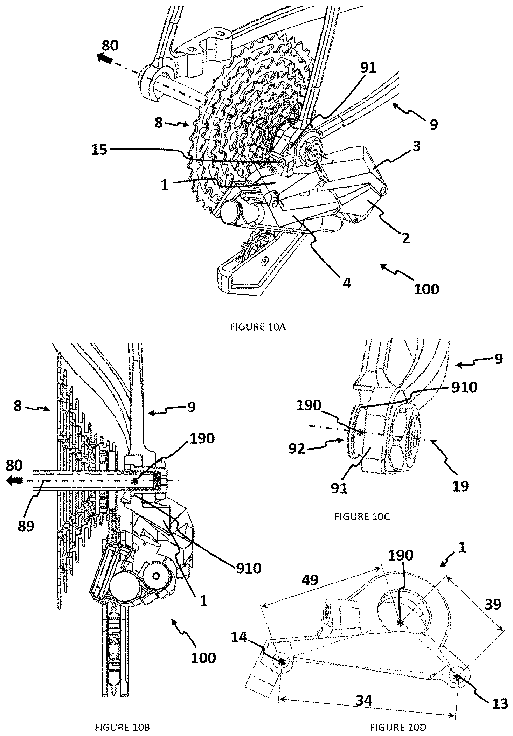

A fourth preferred embodiment illustrated in Figures 10A to 10D differs from the first preferred embodiment in that the anchoring axis 19 is collinear to the wheel axis 89. This embodiment has the advantage of exact control of the anchoring axis 19 with respect to the cassette 8 (they are coaxial) and it does not depend on how the frame was manufactured, so the rear derailleur 100 will be able to work in optimal conditions and without so much need for fine adjustment with the positioning screw 15. As a drawback, like in the third embodiment, and unlike the first and second embodiments, it requires a frame with a specific geometry so it is a solution with poor compatibility with existing frames on the market.

In this text, the word "comprises" and its variants (such as "comprising", etc.) should not be understood in an exclusive sense, i.e., they do not exclude the possibility of that which is described including other elements, steps, etc.

Moreover, the invention is not limited to the specific embodiments described herein, but rather encompasses, for example, the variations that a person skilled in the art could make (for example, regarding the choice of materials, dimensions, components, configuration, etc.), within the scope of what may be deduced from the claims.

## Claims

1. A rear derailleur (100) for bicycles comprising:
a base component (1) configured to be coupled on an anchoring axis (19) to a bicycle frame (9), or to an anchoring part (90) solidly attached to the bicycle frame (9), and
a moveable component (2), the base (1) and moveable (2) components being connected to each other by means of
a first connector component (3) articulated with respect to the base component (1) by means of a first rotation axis (13) and articulated with respect to the moveable component (2) by means of a second rotation axis (23) parallel to the first rotation axis (13), and
a second connector component (4) articulated with respect to the base component (1) by means of a third rotation axis (14) parallel to the first rotation axis (13) and articulated with respect to the moveable component (2) by means of a fourth rotation axis (24) parallel to the first rotation axis (13),
**characterised in that**
the third rotation axis (14) is arranged in the base component (1) on the side opposite to the first rotation axis (13) with respect to a central area containing the anchoring axis (19).

2. The rear derailleur (100) according to claim 1, wherein the support distance (34) between the first rotation axis (13) and the third rotation axis (14) is greater than a first distance (39) defined between the first rotation axis (13) and the anchoring point (190) defined as the intersection of the anchoring axis (19) with the contact plane (910) between the base component (1) and the bicycle frame (9), or the anchoring part (90) solidly attached to the bicycle frame (9).

3. The rear derailleur (100) according to claim 1, wherein the support distance (34) between the first rotation axis (13) and the third rotation axis (14) is greater than a first distance (39) defined between the first rotation axis (13) and the anchoring point (190) defined as the point of contact with an axial component between the base component (1) and the bicycle frame (9), or the anchoring part (90), of greater value according to the rotation vector (80) for advancing a cassette (8) rotationally mounted to the bicycle frame (9) with respect to the wheel axis (89).

4. The rear derailleur (100) according to any of the preceding claims, wherein the support distance (34) is greater than a second distance (49) defined between the anchoring point (190) and the third rotation axis (14).

5. The rear derailleur (100) according to any of the preceding claims, wherein in the operating configuration wherein the moveable base (2) is in the position of least value according to the rotation vector (80), the support distance (34) has an intermediate value between a third distance (12) between the first rotation axis (13) and the fourth rotation axis (24), and a fourth distance (21) between the second rotation axis (23) and the third rotation axis (14).

6. The rear derailleur (100) according to any of the preceding claims, wherein the first rotation axis (13) is arranged at an angle of between 10 and 80° with respect to the anchoring axis (19).

7. The rear derailleur (100) according to any of the preceding claims, comprising a tensioner (5) articulated with respect to the moveable component (2) by means of a tensioner axis (25) and a tension spring (50) that forces the tensioner (5) to rotate in the positive direction of the rotation vector (80) with respect to the moveable component (2) according to the tensioner axis (25).

8. The rear derailleur (100) according to any of the preceding claims, wherein the bicycle frame (9), or the anchoring part (90), comprises a rotation stop (91), and wherein the base component (1) has a positioning screw (15), which in contact with the rotation stop (91) defines the minimum angular operation position of the base component (1) with respect to the bicycle frame (9) in the direction of the rotation vector (80).

9. The rear derailleur (100) according to any of the preceding claims, wherein the anchoring part (90) comprises a single means of axial connection with respect to the bicycle frame (9) in the form of a fixing screw (92) that is concentric to the anchoring axis (19).

10. The rear derailleur (100) according to any of the preceding claims, wherein the anchoring axis (19) is collinear to the wheel axis (89).

11. The rear derailleur (100) according to any of the preceding claims, wherein the movement of the moveable component (2) with respect to the base component (1) is electrically actuated.

12. The rear derailleur (100) according to claim 11, which comprises a floating linear actuation unit (6), comprising an electric motor (61) that drives a spindle-nut mechanism (62), a power source (63) and a wireless unit (64),
which is articulated with respect to a first component (1, 2, 3, 4) of the rear derailleur (100) according to a fifth rotation axis (65) parallel to the first rotation axis (13), and
which is articulated with respect to a second component (1, 2, 3, 4) of the rear derailleur (100) different from the first component (1, 2, 3, 4) according to a sixth
rotation axis (66) parallel to the first rotation axis (13).
